(19) **Europäisches Patentamt / European Patent Office / Office européen des brevets**

(11) **EP 1 777 904 B1**

(12) **FASCICULE DE BREVET EUROPEEN**

(45) Date de publication et mention
de la délivrance du brevet:
**07.01.2009 Bulletin 2009/02**

(51) Int Cl.:
***H04L 25/49*** *(2006.01)*

(21) Numéro de dépôt: **06122350.9**

(22) Date de dépôt: **16.10.2006**

(54) **Multiplexeur à haut débit à architecture parallèle**

Multiplexer mit hoher Bit-Rate mit paralleler Architektur

High bit-rate multiplexer with a parallel architecture

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **21.10.2005 FR 0510777**

(43) Date de publication de la demande:
**25.04.2007 Bulletin 2007/17**

(73) Titulaire: **Alcatel Lucent**
**75008 Paris (FR)**

(72) Inventeurs:
• **Godin, Jean**
**94100, SAINT MAUR DES FOSSES (FR)**
• **Konczykowska, Agnieszka**
**94240, L'HAY LES ROSES (FR)**

(74) Mandataire: **Korakis-Ménager, Sophie**
**Alcatel Lucent**
**Intellectual Property & Standards**
**54 rue La Boétie**
**75008 Paris (FR)**

(56) Documents cités:
**EP-A- 1 026 863**      **US-A- 5 825 807**

**Description**

Le domaine de l'invention est celui des multiplexeurs électroniques pour transmission de données numériques à haut débit.

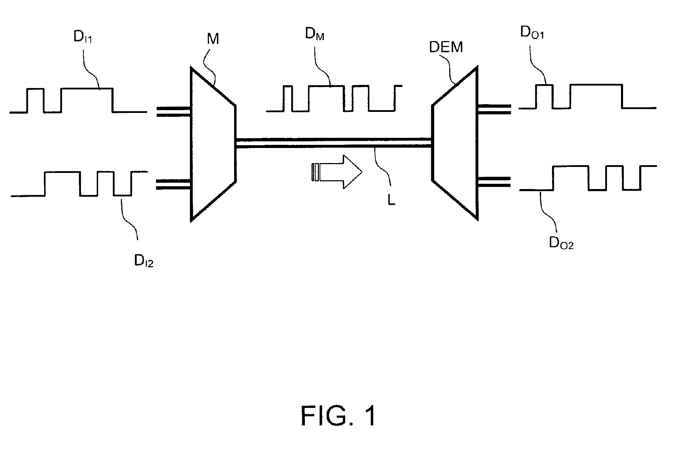

Pour minimiser le nombre de câbles de transmission de données numériques, il est intéressant de multiplexer les données de façon à faire transiter dans un même câble plusieurs signaux numériques. Pour réaliser le multiplexage de données numériques, il existe différents types de techniques possibles. Une de ces techniques couramment employée est dite TDM, acronyme anglo-saxon signifiant Time Division Multiplexing. Le principe de cette technique est illustrée en figure 1 dans le cas de la transmission de deux signaux $D_{I1}$ et $D_{I2}$. Les deux signaux numériques ayant le même débit F sont multiplexés temporellement par un multiplexeur M qui émet un seul signal numérique $D_M$ à un débit 2F sur un seul canal L, ce signal $D_M$ est ensuite démultiplexé par un démultiplexeur DEM pour redonner les deux signaux initiaux $D_{O1}$ et $D_{O2}$ au débit F. Généralement, le signal multiplexé $D_M$ est obtenu en entrelaçant les signaux initiaux, un bit sur deux du signal multiplexé correspond, par exemple, aux bits du premier signal $D_{I1}$, les autres bits du signal multiplexé correspondant à ceux du second signal $D_{I2}$.

Lorsque le signal multiplexé $D_M$ est transmis par voie optique, les moyens de multiplexage sont soit des moyens optiques soit des moyens électroniques. Dans le premier cas, on parle de multiplexage OTDM, acronyme anglo-saxon signifiant Optical Time Division Multiplexing. Dans le second cas, on parle de multiplexage ETDM, acronyme anglo-saxon signifiant Electrical Time Division Multiplexing.

Les technologies ETDM sont moins chères que les technologies OTDM qui sont généralement réservées aux transmissions très haut débit. Les technologies ETDM sont actuellement limitées à 80 gigabits par seconde. Elles utilisent généralement des technologies :

- Pour les débits peu élevés, à base de Silicium-(Bi)-CMOS, acronyme anglo-saxon signifiant Complementary Metal Oxide Semiconductor ;
- Pour les débits plus élevés, à base de SiGe, GaAs ou InP.

Actuellement, il existe un besoin croissant pour des transmissions à très haut débit, supérieur à 80 Gbits/s, débit qui n'est pas facilement accessible aux technologies ETDM.

Le document EP1026863 révèle un multiplexeur classique opérant par division temporelle. Ce multiplexeur utilise un signal d'horloge deux fois supérieur à la période d'échantillonnage du signal d'entrée.

Aussi, le dispositif selon l'invention permet de doubler simplement les capacités de multiplexage des technologies ETDM actuelles. On peut ainsi obtenir des débits importants correspondant aux besoins actuels en matière de télécommunications en utilisant des technologies moins coûteuses. Bien entendu, l'invention peut également s'appliquer aux technologies OTDM.

Plus précisément, l'invention a pour objet un circuit électronique de multiplexage temporel de deux signaux initiaux à codage binaire de type NRZ, chaque bit des signaux ayant une durée T, les deux signaux pouvant prendre des valeurs respectives définissant 4 états notés « 0, 0 », « 0, 1 », « 1, 0 », « 1,1 », ledit circuit comprenant au moins :

- Un générateur des 4 signaux primaires associés respectivement à ces dits 4 états :

  - Un premier signal primaire continu d'amplitude correspondant au niveau binaire « 0 » ;
  - Un second signal primaire continu d'amplitude correspondant au niveau binaire « 1 » ;
  - Un troisième signal binaire périodique comportant une succession de bits alternativement aux niveaux binaires « 0 » et « 1 », chaque bit dudit troisième signal ayant une durée T/2, moitié de la durée des bits des signaux initiaux ;
  - Un quatrième signal binaire périodique comportant une succession de bits alternativement aux niveaux binaires « 0 » et « 1 », chaque bit dudit quatrième signal ayant une durée T/2, moitié de la durée des bits des signaux initiaux, ledit quatrième signal étant déphasé d'une durée d'un bit par rapport au troisième signal ;

- Des moyens de sélection contrôlés par les deux signaux initiaux permettant de générer un signal final à partir des 4 signaux primaires, lesdits moyens étant agencés de façon que, pour chaque durée T pour laquelle les deux signaux définissent un état donné, le signal final résulte de la sélection pendant cette durée de celui des 4 signaux primaires qui est associé audit état donné.

Typiquement, le signal de sortie est égal au :

- Premier signal primaire si l'état des signaux initiaux vaut « 0,0 »;
- Second signal primaire si l'état des signaux initiaux vaut «1,1 »;
- Troisième signal primaire si l'état des signaux initiaux vaut «1,0»;
- Quatrième signal primaire si l'état des signaux initiaux vaut « 0,1 ».

Les autres associations « signaux primaires-états » restent toutefois possibles. Il convient alors dans chaque cas que l'association choisie soit prise en compte au niveau des opérations de démultiplexage effectuées en réception.

Avantageusement, le circuit électronique comporte un bloc logique permettant de générer 4 signaux logiques associés respectivement aux 4 états des signaux initiaux, un état logique d'un signal logique valant 1 lorsque les signaux initiaux définissent un état associé audit signal logique et 0 dans les autres cas ; les moyens de sélection peuvent comporter des moyens permettant de réaliser la somme des 4 produits des signaux logiques par les signaux primaires.

Avantageusement, les signaux sont des signaux optiques et les moyens de sélection sont des portes optiques contrôlées électroniquement.

L'invention sera mieux comprise et d'autres avantages apparaîtront à la lecture de la description qui va suivre donnée à titre non limitatif et grâce aux figures annexées parmi lesquelles :

- La figure 1 représente le principe général d'un ensemble de multiplexage/démultiplexage à deux canaux ;
- La figure 2 représente le principe général du circuit de multiplexage selon l'invention ;
- La figure 3 représente les variations temporelles des différents signaux mis en oeuvre par le circuit de multiplexage selon l'invention ;
- La figure 4 représente une variante du dispositif de multiplexage selon l'invention.

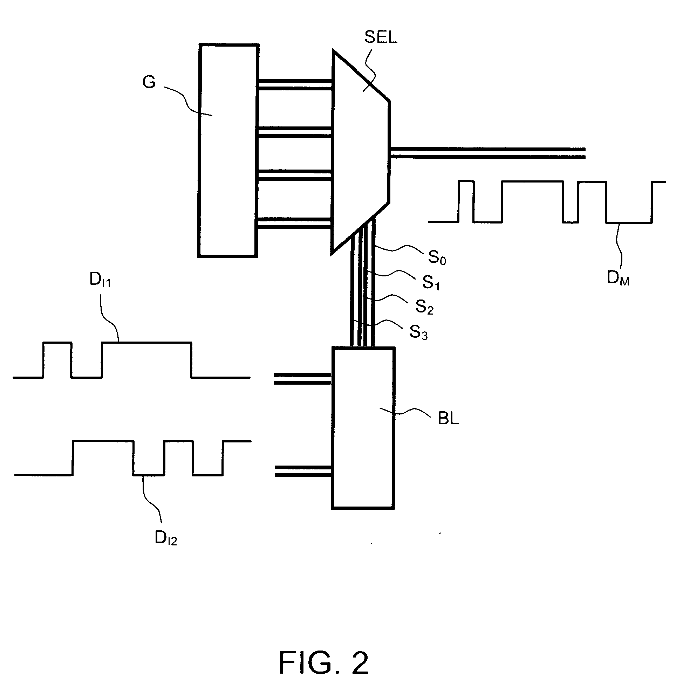

La figure 2 représente le principe général du circuit de multiplexage selon l'invention permettant de multiplexer deux signaux initiaux $D_{I1}$ et $D_{I2}$ à codage binaire de type NRZ, acronyme signifiant Non Retour à Zéro. Les bits composant ces signaux ont une durée temporelle T à laquelle correspond un débit F égale à 1/T. Le circuit de multiplexage comprend essentiellement :

- Un générateur G de 4 signaux primaires ;
- Des moyens de sélection activés électroniquement SEL desdits signaux primaires contrôlés par les deux signaux initiaux. $D_{I1}$ et $D_{I2}$ permettant de générer le signal multiplexé final $D_M$.

A titre d'exemple, le contrôle des moyens de sélection est obtenu par un bloc logique BL permettant de générer 4 signaux logiques tous différents $S_0$, $S_1$, $S_2$ et $S_3$ dépendant des deux signaux initiaux $D_{I1}$ et $D_{I2}$.

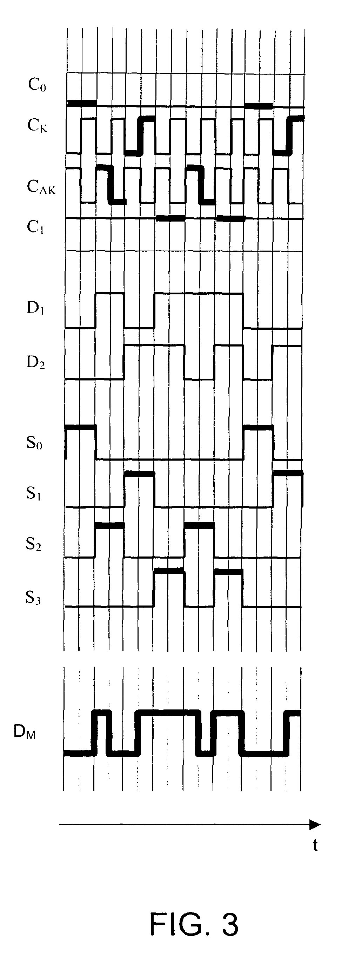

La figure 3 représente les variations temporelles des différents signaux nécessaires à l'invention dans le cas de deux signaux $D_{I1}$ et $D_{I2}$. Sur cette figure, le temps t est en abscisse et l'intensité des différents signaux en ordonnée. Les lignes fines verticales sont séparées d'une durée égale à une demi-période T/2. Les parties grasses des signaux D et C représentent les parties utiles servant à la « construction » du signal multiplexé.

Comme illustré en figure 3, les 4 signaux primaires issus du générateur G sont les suivants :

- Un premier signal primaire $C_0$ continu d'amplitude correspondant au niveau binaire « 0 » ;

- Un second signal primaire $C_1$ continu d'amplitude correspondant au niveau binaire « 1 » ;
- Un troisième signal primaire $C_K$ périodique comportant une succession de bits alternativement aux niveaux binaires « 0 » et « 1 », chaque bit dudit troisième signal ayant une durée T/2, moitié de la durée des bits des signaux initiaux ;
- Un quatrième signal primaire $C_{AK}$ périodique comportant une succession de bits alternativement aux niveaux binaires « 0 » et « 1 », chaque bit dudit troisième signal ayant une durée T/2, moitié de la durée des bits des signaux initiaux, ledit quatrième signal étant déphasé d'une durée d'un bit par rapport au troisième signal.

Bien entendu, la génération des deux premiers signaux $C_0$ et $C_1$ ne pose aucun problème technique. Bien que les signaux $C_K$ et $C_{AK}$ soient à une fréquence double de celle des signaux initiaux, leur génération ne pose également pas de problèmes techniques dans la mesure où ils correspondent à des signaux périodiques simples qu'il est possible de générer à haute fréquence.

Pendant une période T, la paire de signaux $D_{I1}$ et $D_{I2}$ ne peuvent avoir que l'un des 4 états possibles suivants : « 0, 0 », « 0, 1 », « 1, 0 », « 1, 1 ». Par conséquent, le signal multiplexé correspondant à ces deux signaux correspond nécessairement à l'un des 4 signaux primaires.

Le but des moyens de sélection est de sélectionner le bon signal primaire correspondant aux différents états des signaux initiaux. A cette fin, on peut utiliser un bloc logique qui, à partir des signaux initiaux génère 4 signaux logiques $S_0$, $S_1$, $S_2$ et $S_3$ associés respectivement aux 4 états des signaux initiaux, l'état logique d'un signal logique valant 1 lorsque les signaux initiaux définissent un état associé audit signal logique et 0 dans les autres cas. Ces signaux sont représentés sur la figure 3. Par exemple, $S_0$ vaut « 1 » lorsque les deux signaux $D_{I1}$ et $D_{I2}$ valent « 0, 0 » et $S_0$ vaut « 0 » lorsque les deux signaux $D_{I1}$ et $D_{I2}$ valent « 0, 1 », « 1, 0 » et « 1, 1 ». La génération de ces signaux logiques, qui se fait à la fréquence F, ne pose pas de problèmes de réalisation technique.

Ainsi, les 4 signaux logiques sont représentatifs de l'état des signaux $D_{I1}$ et $D_{I2}$. Chacun des 4 signaux logiques commande la sélection d'un des 4 signaux primaires. Le signal primaire sélectionné correspond à l'état des signaux $D_{I1}$ et $D_{I2}$. A titre d'exemple, l'opération logique réalisée est la suivante :

$$D_M = C_0.S_0 + C_K.S_1 + C_{AK}.S_2 + C_1.S_3$$

La synchronisation des signaux primaires $C_K$ et $C_{AK}$ par rapport aux signaux de sélection est essentielle au bon fonctionnement du circuit. L'utilisation de dispositifs à bascule dites D.FF, FF étant l'acronyme anglo-saxon de Flip-Flop permet de résoudre ce problème. Il est cependant possible que les transitions entre la succession des signaux primaires constituant le signal multiplexé ne soient pas parfaites. Dans ce cas, elles peuvent être filtrées au niveau de la sortie des moyens de sélection.

Il est également possible d'utiliser une autre disposition. En effet, le signal multiplexé est constitué par la succession des bits $B_{D1}$ du premier signal $D_1$ suivi des bits $B_{D2}$ du second signal $D_2$ pour constituer la succession temporelle $B_{D1}$ - $B_{D2}$- $B_{D1+T}$- $B_{D2+T}$ - $B_{D1+2T}$...

On peut obtenir le signal multiplexé de façon différente. On retarde chaque bit $B_{D2}$ du second signal $D_2$ d'une durée temporelle égale à la durée d'un bit. On obtient un signal retardé $D_{2-T}$. On réalise alors un signal multiplexé par la succession des bits $B_{D2-T}$ du signal retardé suivi des bits $B_{D1}$ du signal $D_1$ pour constituer la succession temporelle $B_{D2-T}$ - $B_{D1}$ - $B_{D2}$- $B_{D1+T}$-$B_{D2+T}$... Ce second signal multiplexé est, comme on le voit, identique au premier à un retard temporel près égal à une demi-période. Cependant, il a été généré à partir de signaux primaires différents qui apportent un bruit nécessairement différent de celui du signal multiplexé initial. En sommant ces deux signaux multiplexés, on diminue ainsi le bruit de façon importante.

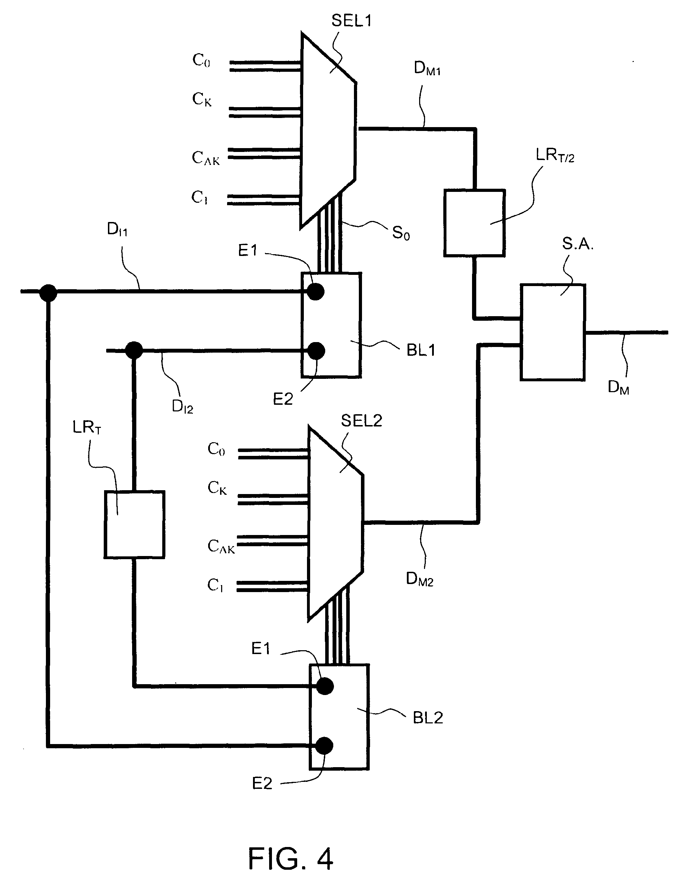

A titre d'exemple, le dispositif représenté en figure 4 permet de réaliser cette fonction. Il comprend :

• Un générateur G des 4 signaux primaires $C_0$, $C_1$, $C_K$ et $C_{AK}$ ;
• Deux blocs logiques BL1 et BL2 ;
• Deux moyens de sélection SEL1 et SEL2 reliés au générateur et aux blocs logiques ;
• Deux circuits à retard, le premier $LR_T$ générant un premier retard égal à une période T et le second $LR_{T/2}$ générant un second retard égal à une demi-période T/2 ;
• Un sommateur analogique S.A..

Le fonctionnement est le suivant :

Chaque bloc logique possède deux entrées notées E1 et E2. le montage est tel que, dans le multiplex temporel issu de chaque moyen de sélection SEL1 ou SEL2, les bits correspondant au signal reçu par la première entrée E1 du bloc logique associé BL1 ou BL2 précèdent ceux correspondant au signal reçu par la seconde entrée E2. Les signaux $D_1$ et $D_2$ sont connectés respectivement aux entrées E1 et E2 du bloc logique BL1 et sont connectés respectivement aux entrées E2 et E1 du bloc logique BL2, le signal D2 étant retardé dans ce cas d'une période T par le premier circuit à retard $LR_T$.

Les blocs logiques BL1 et BL2 génèrent chacun 4 signaux logiques $S_0$, $S_1$, $S_2$ et $S_3$ qui commandent les signaux primaires des sélecteurs SEL1 et SEL2.

En sortie des sélecteurs, on obtient deux signaux multiplexés identiques $D_{M1}$ et $D_{M2}$ mais déphasés d'une demi-période. Le second circuit à retard permet de les mettre en phase et le sommateur analogique de les additionner. On obtient alors un signal multiplexé $D_M$ dont le bruit est réduit.

Les circuits selon l'invention peuvent être mis en oeuvre par des moyens électroniques classiques sur des signaux initiaux électroniques.

Il est également possible de réaliser un multiplexage produisant un multiplex optique à partir de signaux primaires optiques obtenus au moyen, par exemple, de modulateurs électro-optiques. Dans ce dernier cas, les moyens de sélection sont des portes optiques contrôlées électroniquement.

**Revendications**

1. Circuit électronique de multiplexage temporel de deux signaux initiaux ($D_{I1}$, $D_{I2}$) à codage binaire de type NRZ, chaque bit des signaux ayant une durée T, les deux signaux pouvant prendre des valeurs respectives définissant 4 états notées « 0, 0 », « 0, 1 », « 1, 0 », « 1,1», ledit circuit comprenant au moins :

    • Un générateur (G) de 4 signaux primaires associés respectivement à ces dits 4 états :

        • Un premier signal primaire ($C_0$) continu d'amplitude correspondant au niveau binaire « 0 » ;
        • Un second signal primaire ($C_1$) continu d'amplitude correspondant au niveau binaire « 1 » ;
        • Un troisième signal primaire ($C_K$) périodique comportant une succession de bits alternativement aux niveaux binaires « 0 » et « 1 », chaque bit dudit troisième signal ayant une durée T/2, moitié de la durée des bits des signaux initiaux ;
        • Un quatrième signal primaire ($C_{AK}$) périodique comportant une succession de bits alternativement aux niveaux binaires « 0 » et « 1 », chaque bit dudit quatrième signal ayant une durée T/2, moitié de la durée des bits des signaux initiaux, ledit quatrième signal étant déphasé d'une durée d'un bit par rapport au troisième signal ;

    • Des moyens de sélection (SEL) électronique contrôlés par les deux signaux initiaux permettant de générer un signal final ($D_M$) à partir des 4 signaux primaires, lesdits moyens étant agencés de façon que, pour chaque durée T pour laquelle les deux signaux définissent un état donné, le signal final résulte de la sélection pendant cette durée de celui des 4 signaux primaires qui est associé audit état donné.

2. Circuit électronique de multiplexage selon la revendication 1, **caractérisé en ce que** l'association des signaux primaires et des états des signaux initiaux est la suivante :

• Premier signal primaire associé à l'état « 0, 0 » ;
• Second signal primaire associé à l'état « 1, 1 » ;
• Troisième signal primaire associé à l'état « 1, 0 » ;
• Quatrième signal primaire associé à l'état « 0, 1 » ;

3. Circuit électronique de multiplexage selon l'une des revendications 1 ou 2, **caractérisé en ce que** le circuit électronique comporte, en outre, un bloc logique (BL) permettant de générer 4 signaux logiques ($S_0$, $S_1$, $S_2$ et $S_3$) associés respectivement aux 4 états des signaux initiaux, l'état logique d'un signal logique valant 1 lorsque les dits signaux initiaux définissent un état associé audit signal logique et 0 dans les autres cas.

4. Circuit électronique de multiplexage selon la revendication 3, **caractérisé en ce que** les moyens de sélection (SEL) comportent des moyens permettant de réaliser la somme des 4 produits des signaux logiques ($S_0$, $S_1$, $S_2$ et $S_3$) par les signaux primaires ($C_0$, $C_1$, $C_K$ et $C_{AK}$).

5. Circuit électronique de multiplexage selon l'une des revendications précédentes, **caractérisé en ce que** les signaux sont des signaux optiques et les moyens de sélection sont essentiellement des portes optiques contrôlées électroniquement.

**Claims**

1. An electronic multiplexing circuit for the time division multiplexing of two NRZ-type binary-code initial signals ($D_{I1}$, $D_{I2}$), each signal bit having a duration T, both signals being able to take on respective values defining 4 states designated "0, 0", "0, 1", "1, 0", and "1, 1", said circuit comprising at least:

• A generator (G) for generating 4 primary signals, each one respectively associated with one of said 4 states:

o A first continuous amplitude primary signal ($C_0$) corresponding to the binary state "0",
o A second continuous amplitude primary signal ($C_1$) corresponding to the binary state "1",
o A third periodic primary signal ($C_K$) comprising a succession of bits alternating between the binary states "0" and "1", each bit of said third signal having a duration of T/2, one-half of the duration of the bits of the initial signal;
o A fourth periodic primary signal ($C_{AK}$) comprising a succession of bits alternating between the binary states "0" and "1", each bit of said fourth signal having a duration of T/2, one-half of the duration of the bits of the initial signal, said fourth signal being phase-shifted by a duration of one bit with respect to the third signal;

• Electronic selection means (SEL) controlled by both initial signals, making it possible to generate a final signal ($D_M$) based on the 4 primary signals, said means being configured so that, for each duration T for which both signals define a given state, the final signal results from selecting, during this duration, the one of the 4 primary signals which is associated with said given state.

2. An electronic multiplexing circuit according to claim 1, **characterized in that** the association of the primary signals and the states of the initial signals is as follows:

• First primary signal associated with the state "0, 0";
• Second primary signal associated with the state "1, 1";
• Third primary signal associated with the state "1, 0";
• Fourth primary signal associated with the state "0, 1 ";

3. An electronic multiplexing circuit according to one of the claims 1 or 2, **characterized in that** the electronic circuit further comprises a logic block (BL) for generating 4 logic signals ($S_0$, $S_1$, $S_2$, and $S_3$), respectively associated with the 4 states of the initial signals, the logic state of a logic signal being 1 when said initial signals define a state associated with said logic signal, and 0 otherwise.

4. An electronic multiplexing circuit according to claim 3, **characterized in that** the selection means (SEL) comprises means for finding the sum of the 4 products of the logic signals ($S_0$, $S_1$, $S_2$, and $S_3$) added to the primary signals ($C_0$, $C_1$, $C_K$, and $C_{AK}$).

5. An electronic multiplexing circuit according to any one of the preceding claims, **characterized in that** the signals are optical signals and the selection means are essentially electronically-controlled optical gates.

**Patentansprüche**

1. Elektronischer Zeitmultiplex-Schaltkreis mit zwei ursprünglichen Signalen ($D_{I1}$, $D_{I2}$) mit binärer Codierung vom Typ NRZ, wobei jedes Bit der Signale eine Dauer T hat und beide Signale die jeweiligen Werte, welche 4 mit "0, 0"; "0, 1 ", "1,0", "1,1" notiert sind, annehmen können, wobei jeder Schaltkreis mindestens umfasst:

   Einen Erzeuger (G) von 4 primären Signalen, welche jeweils mit diesen besagten 4 Zuständen assoziiert sind:

   Ein erstes primäres Amplituden-Dauersignal ($C_0$), welches dem Binär-"0"-Pegel entspricht;
   ein zweites primäres Amplituden-Dauersignal ($C_1$), welches dem Binär-"1"-Pegel entspricht;
   ein drittes periodisches Primärsignal ($C_K$), welches eine Folge von Bits mit alternativen "O"- und "1"-Pegeln umfasst, wobei jedes Bit des besagten dritten Signals eine Dauer T/2, d.h. die Hälfte der Dauer der Bits der ursprünglichen Signale, hat;
   ein viertes periodisches Primärsignal ($C_{AK}$), welches eine Folge von Bits mit alternativen "O"- und "1"-Pegeln umfasst, wobei jedes Bit des besagten vierten Signals eine Dauer T/2, d.h. die Hälfte der Dauer der Bits der ursprünglichen Signale, hat, wobei das vierte Signal gegenüber dem dritten Signal um die Dauer eines Bits phasenverschoben ist;

   von den beiden ursprünglichen Signalen gesteuerte elektronische Auswählmittel (SEL), welche es ermöglichen, ausgehend von den 4 Primärsignalen ein Endsignal ($D_M$) zu erzeugen, wobei die besagten Mittel so ausgestaltet sind, dass sich für jede Dauer T, für welche die beiden Signale einen gegebenen Zustand definieren, das Endsignal aus der Auswahl während dieser Dauer desjenigen der 4 Primärsignale, welches dem besagten gegebenen Zustand zugeordnet ist, ergibt.

2. Elektronischer Multiplex-Schaltkreis nach Anspruch 1, **dadurch gekennzeichnet, dass** die Assoziation des Primärsignale und der Zustände der ursprünglichen Signale wie folgt ist:

   Erstes Primärsignal assoziiert mit dem Zustand "0,0";
   Zweites Primärsignal assoziiert mit dem Zustand "1,1";
   Drittes Primärsignal assoziiert mit dem Zustand "1,0";

   Viertes Primärsignal assoziiert mit dem Zustand "0,1".

3. Elektronischer Multiplex-Schaltkreis nach einem der Ansprüche 1 oder 2, **dadurch gekennzeichnet, dass** der elektronische Schaltkreis weiterhin einen logischen Block (BL) umfasst, welcher es ermöglicht, 4 logische Signale ($S_0$, $S_1$, $S_2$ und $S_3$) zu erzeugen, welche jeweils den 4 Zuständen der ursprünglichen Signale zugeordnet sind, wobei der logische Zustand eines logischen Signals 1 entspricht, wenn die besagten ursprünglichen Signale einen mit dem besagten logischen Signal assoziierten Zustand definieren, und anderenfalls 0 entspricht.

4. Elektronischer Multiplex-Schaltkreis nach Anspruch 3, **dadurch gekennzeichnet, dass** die Auswählmittel (SEL) Mittel umfassen, welche es ermöglichen, die Summe der 4 Produkte der logischen Signale ($S_0$, $S_1$, $S_2$ und $S_3$) durch die Primärsignale ($C_0$, $C_1$, $C_K$ und $C_{AK}$) durchzuführen.

5. Elektronischer Multiplex-Schaltkreis nach einem der vorstehenden Ansprüche, **dadurch gekennzeichnet, dass** die Signale optische Signale und die Auswählmittel im Wesentlichen elektronisch gesteuerte optische Gatter sind.

FIG. 1

FIG. 2

FIG. 3

FIG. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1026863 A